# EUROPEAN PATENT APPLICATION

(11) **EP 4 122 992 A1**
(43) Date of publication of application: **25.01.2023**
(21) Application number: 21187226.2
(22) Date of filing: 22.07.2021
(51) Int. Cl.: C09J 5/06, B29C 35/04

(54) **A PARTIAL CURING METHOD FOR A SEALANT, AND TOOL HEAD AND CURING APPARATUS FOR USE IN SAID METHOD**

(71) Applicant: Airbus Operations GmbH, 21129 Hamburg (DE)
(72) Inventor: Winkler, Jens, 21129 Hamburg (DE); Heim, Clemens, 21129 Hamburg (DE)
(74) Representative: KASTEL Patentanwälte PartG mbB

(57) **Abstract**

In order to reduce the lead time for further working on aircraft parts (10, 12), the invention proposes partial curing of a sealant (22) so that it has a cured sealant surface (34) that encloses an uncured sealant core (36). To this end, the sealant (22) is first exposed to hot steam (28) so as to reach about 80 °C and a high relative humidity. Secondly, the sealant (22) is exposed to dry hot air (32). This method may be performed using a tool head (30) that has a steam zone (48) and a drying zone (50). The steam zone (48) applies hot steam (28) to the sealant (22) while the drying zone (50) applies hot air (32) to the sealant (22).

## Description

The invention relates to a partial curing method and apparatus used therein.

Modern aircraft are manufactured using (composite) parts that are bonded to each other using sealants. Before the parts are processed further, the sealant is usually cured, e.g. by waiting a certain time until the sealant is cured. In particular, for polysulfide based sealants, that are very popular for aircraft manufacture, hardeners which react with energy like UV-light or other radiation sources are currently under development. Other curing methods are generally known from the documents listed.

KR 2019 0 001 917 U discloses a method and apparatus for completely curing a sealant by hot air and water vapor.

DE 39 09 127 A1 discloses a quick curing method for curing a sealant such that a certain initial strength of bond is achieved.

US 4 578 421 A discloses fully cross-linking of an elastomer at a temperature of 140 °C under a pressure of 5.5 bars and for a time of 3 hours.

US 2021 / 0 261 052 A1 discloses curing of a structural adhesive that is reached by application of heat. The heat may be applied by use of electric blankets, infra-red radiation, hot air or steam. The humidity is immaterial.

It is the object of the invention to reduce the lead time for further working on aircraft parts.

The object is achieved by the subject-matter of the independent claims. Preferred embodiments are subject-matter of the dependent claims.

The invention provides a partial curing method for only partially curing a sealant, the method comprising:
a) providing a surface area of a part and applying the uncured sealant to the surface area;
b) exposing the uncured sealant to hot steam for an exposure time from 2.5 minutes and drying the steamed sealant by heating, so as to obtain a partially cured sealant that has a cured sealant surface and an uncured sealant core that is partially enclosed by the cured sealant surface.

Preferably, the sealant is a manganese-oxide curing sealant. Preferably, the sealant is a polysulphide based sealant.

Preferably, in step b) the mass flow of the steam is above 0 g/min and below 60 g/min. Preferably, in step b) the mass flow of the steam is above 30 g/min. Preferably, in step b) the mass flow of the steam is above 50 g/min.

Preferably, in step b) the hot steam flow is configured such that the temperature at the uncured sealant is 70 °C to 90 °C. Preferably, in step b) the hot steam flow is configured such that the temperature at the uncured sealant is 75 °C to 85 °C. Preferably, in step b) the hot steam flow is configured such that the temperature at the uncured sealant is 78 °C to 82 °C. Preferably, in step b) the hot steam flow is configured such that the temperature at the uncured sealant is 79 °C to 81 °C. Preferably, in step b) the hot steam flow is configured such that the temperature at the uncured sealant is 80 °C.

Preferably, in step b) the steamed sealant is dried by a flow of dry hot air, and the hot air temperature is chosen so as to avoid condensation on the part.

Preferably, in step b) the exposure to hot steam is done before the drying of the steamed sealant.

Preferably, in step b) a tool head is arranged at or moved relatively along the sealant, so as to expose and dry the uncured sealant.

Preferably, the tool head includes a steam zone and/or a drying zone. Preferably, the sealant is arranged within any of the zones. Preferably, the zones are at least partially closed on one side by the sealant. Preferably, the tool head is move along the sealant, wherein the sealant is exposed to the hot steam when passing the steam zone and the sealant is dried when passing the drying zone.

Preferably, the steam zone is separated from the drying zone by a wall. Preferably, the steam zone is temperature controlled using a temperature sensor. Preferably, the drying zone is temperature controlled using a temperature sensor.

Preferably, the steam zone is humidity controlled using a humidity sensor. Preferably, the drying zone is humidity controlled using a humidity sensor.

The invention provides a tool head adapted for use in a preferred method, the tool head comprising a steam zone configured for discharging hot steam towards a sealant, and a drying zone configured for discharging heat towards the sealant.

Preferably, the steam zone is separated from the drying zone by a wall. Preferably, the steam zone comprises a temperature sensor for temperature controlling of the temperature within the steam zone. Preferably, the drying zone comprises a temperature sensor for temperature controlling of the temperature within the drying zone.

Preferably, the steam zone comprises a humidity sensor for humidity controlling of the relative humidity within the steam zone. Preferably, the drying zone comprises a humidity sensor for humidity controlling of the relative humidity within the drying zone.

The invention provides a curing apparatus comprising a preferred tool head and a control unit that is configured for performing the preferred method.

Preferably, the control unit is configured for controlling the temperature within the steam zone based on a measurement by temperature sensor. Preferably, the control unit is configured for controlling the temperature within the drying zone based on a measurement by temperature sensor.

Preferably, the control unit is configured for controlling the relative humidity within the steam zone based on a measurement by humidity sensor. Preferably, the control unit is configured for controlling the relative humidity within the drying zone based on a measurement by humidity sensor.

Preferably, the curing apparatus further comprises a steam generator configured for generating hot steam, wherein the steam generator is operatively coupled to the steam zone, so as to discharge the hot steam towards the sealant.

Preferably, the curing apparatus further comprises a heating apparatus that includes a heating element configured for heating air and a fan for generating an air flow, wherein the air flow is heatable by the heating element, wherein the heating apparatus is operatively coupled to the drying zone, so as to discharge a dry hot air flow towards the sealant.

Generally, after a sealant application the part has to wait a certain period until the sealant (e.g. Naftoseal^{®} MC-780) is tack free. To reduce the tack free time a chamber with two zones can be moved over the sealant. In zone one the sealant is exposed to hot steam for more than 2.5 min, preferably with a mass flow below 60 g/min, and a preferred steam temperature on the surface of about 80 °C. In zone two the surface can be dried with air. The condition in the chamber should be chosen such that condensation of steam on the surface is minimized and the surface is dry after the chamber leaves the area. After that the sealant has a tack free and cured surface with an uncured core.

The part is now ready for the next process step after minutes instead of hours and the sealant core will cure during the next process / assembly steps.

In the assembly process areas can be protected with different layers to prevent corrosion. Further sealants and paints may be coated on top of the partially cured sealant to protect it against aggressive fluids, e.g. Skydrol. The sealants used in the assembly are usually two component materials and cure under anaerobic conditions. The curing time depends on temperature and relative humidity. The paint can be applied after the sealant is tack free. The method described herein reduces delays in the process as the part is not any longer blocked until the much longer unmodified tack free time is reached.

In order to reduce the tack free time and thereby reducing the lead time of the overall operation, the tack free time can be shortened by providing steam and hot air to the sealant. While described in more detail with reference to a sealant fillet and sealant overcoating, it should be noted that the ideas disclosed herein are applicable to sealant beads and other sealant shapes such as overcoatings that may or may not require a paint application afterwards.

The air stream is controlled regarding temperature and humidity to ensure that no condensation on the part occurs. A defined process for temperature on the surface and air steam amount may be defined by the equipment used. A separation of the steam and heating systems as well as sensors for measuring temperature and relative humidity gives additional control. With this condensation and overheating may be avoided.

Embodiments of the invention are described in more detail with reference to the accompanying schematic drawings that are listed below
Fig. 1 depicts an embodiment of a partial curing method; and
Fig. 2 depicts an embodiment of a curing apparatus used in the method.

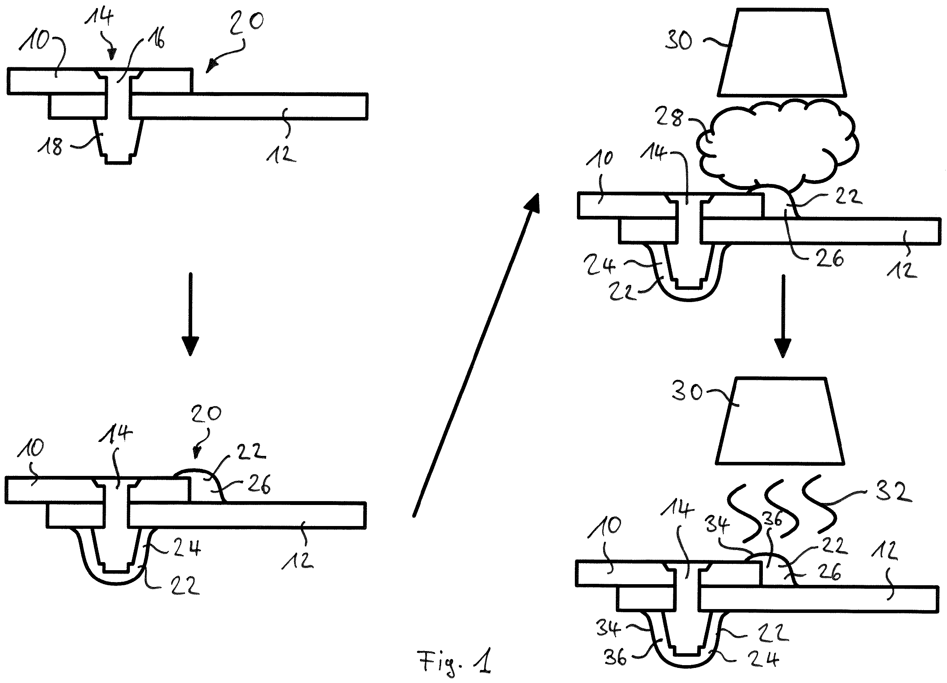

Fig. 1, top left, depicts an arrangement of a first part 10 that is joined to a second part 12. The first part 10 and the second part 12 are joined by fixing members 14. The fixing members 14 may be a bolt 16 and nut 18, for example. It is also possible that the first part 10 is joined to the second part 12 by adhesives. The fixing members 14 may protrude from the second part 12, while they are flush or recessed with the first part 10. The first part 10 and the second part 12 may also form a step portion 20. The first part 10 and the second part 12 are preferably parts for an aircraft.

Fig. 1, bottom left, shows that a sealant 22 is applied to the fixing members 14 or the step portion 20. The sealant 22 forms an overcoating 24 for the fixing members 14 and is applied only locally, so as to cover the fixing members 14. In contrast, the sealant 22 that is applied to the step portion 20 may extend for some length along the step portion 20 in form of a sealant stripe 26. The sealant 22 is uncured in this state.

Usually the sealant 22 is cured before any further processing of the parts 10, 12 is possible, such as coating with paint. Here, however, the sealant 22 is partially cured as subsequently described.

Fig. 1, top right, depicts that the sealant 22 is exposed to hot steam 28. The hot steam 28 is applied with a mass flow of below 60 g/min using a tool head 30. The hot steam 28 is controlled such that the temperature of the sealant 22 reaches about 80 °C. The hot steam 28 is applied for a duration of more than 2.5 min.

Fig. 1, bottom right, depicts that the previously steamed sealant 22 is subsequently dried by hot air 32. The hot air 32 is dry hot air 32. The hot air 32 is "dry" in the sense that the hot air 32 is capable of absorbing and removing humidity from the sealant. The temperature of the hot air 32 is chosen such that condensation of the hot steam 28 on the sealant 22 and the tool head 30 is substantially reduced or prevented entirely.

As a result, the sealant 22 has now a cured sealant surface 34 that encloses an uncured sealant core 36. With this it is possible to further process the parts 10, 12, and coat them with paint, for example.

It should be noted that while the method was described with reference to the sealant stripe 26, the method is also applicable to the overcoating 24.

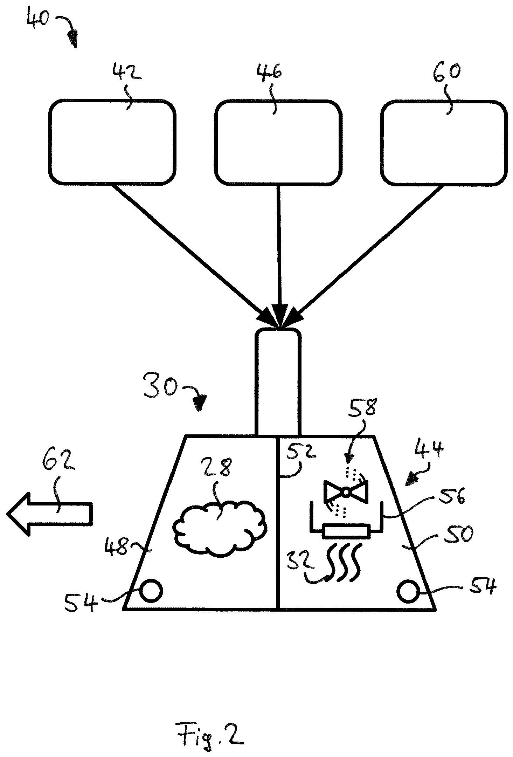

Fig. 2 illustrates a curing apparatus 40 that is adapted for use in the method described before. The curing apparatus 40 includes the tool head 30, a steam generator 42, a heating apparatus 44, and a control unit 46.

The tool head 30 is preferably divided into a steam zone 48 and a drying zone 50. The steam zone 48 and the drying zone 50 are separated by a wall 52. The steam zone 48 and the drying zone 50 may include a couple of sensors 54, specifically each zone 48, 50 has a temperature sensor and a humidity sensor. The temperature sensor measures temperature, preferably as close as possible to the sealant 22, when in operation. The humidity sensor measures relative humidity and may be arranged more liberal than the temperature sensor.

The steam generator 42 generates the hot steam 28. The steam generator 42 is operatively coupled to the steam zone 48, so as to supply the hot steam 28 that it may be applied to the sealant 22. While depicted here separate from the tool head 30, the steam generator 42 may also be integrated into the tool head 30.

The heating apparatus 44 generates the hot air 32. The heating apparatus 44 is operatively coupled to the drying zone 50, so as to supply the dry hot air 32 that it may be applied to the steamed sealant 22. The heating apparatus 44 comprises a heating element 56 and a fan 58 that generates an air flow that is heated by the heating element 56. While the heating apparatus 44 is depicted as being integrated into the tool head 30 it is also possible that the heating apparatus 44 is separate from the tool head 30 and merely supplies the hot air 32.

The control unit 46 is operatively coupled to the sensors 54 and some actuators 60. The control unit 46 is configured to perform the previously described method by controlling the application of hot steam 28 and hot air 32 as well as the movement of the actuators 60. For example, in case of the sealant stripe 26, the control unit 46 causes the actuators 60 to move the tool head 30 along a direction of movement 62 that is chosen such that the sealant 22 is first exposed to the hot steam 28 and only afterwards to the hot air 32. In case of the overcoating 24 configuration, the control unit 46 causes to move the tool head 30 accordingly. It is also possible that, if the wall 52 is not present, the tool head 30 is arranged over the overcoating 24 like a dome and hot steam 28 and hot air 32 are applied one after another.

In order to reduce the lead time for further working on aircraft parts (10, 12), the invention proposes partial curing of a sealant (22) so that it has a cured sealant surface (34) that encloses an uncured sealant core (36). To this end, the sealant (22) is first exposed to hot steam (28) so as to reach about 80 °C and a high relative humidity. Secondly, the sealant (22) is exposed to dry hot air (32). This method may be performed using a tool head (30) that has a steam zone (48) and a drying zone (50). The steam zone (48) applies hot steam (28) to the sealant (22) while the drying zone (50) applies hot air (32) to the sealant (22).

### List of reference signs:

- 10: first part
- 12: second part
- 14: fixing member
- 16: bolt
- 18: nut
- 20: step portion
- 22: sealant
- 24: overcoating
- 26: sealant stripe
- 28: hot steam
- 30: tool head
- 32: hot air
- 34: cured sealant surface
- 36: uncured sealant core
- 40: curing apparatus
- 42: steam generator
- 44: heating apparatus
- 46: control unit
- 48: steam zone
- 50: drying zone
- 52: wall
- 54: sensor
- 56: heating element
- 58: fan
- 60: actuators
- 62: direction of movement

## Claims

1. A partial curing method for only partially curing a sealant (22), the method comprising:
a) providing a surface area of a part (10, 12) and applying the uncured sealant (22) to the surface area;
b) exposing the uncured sealant (22) to hot steam (28) for an exposure time from 2.5 minutes up to 5 min and drying the steamed sealant (22) by heating, so as to obtain a partially cured sealant (22) that has a cured sealant surface (34) and an uncured sealant core (36) that is partially enclosed by the cured sealant surface (34).

2. The method according to claim 1, wherein the sealant (22) is a manganese-oxide curing sealant and/or a polysulphide based sealant.

3. The method according to any of the preceding claims, wherein in step b) the mass flow of the hot steam (28) is above 0 g/min and below 60 g/min.

4. The method according to any of the preceding claims, wherein in step b) the hot steam (28) flow is configured such that the temperature of the uncured sealant (22) is 70 °C to 90 °C.

5. The method according to any of the preceding claims, wherein in step b) the steamed sealant (22) is dried by a flow of dry hot air (32), and the hot air (32) temperature is chosen so as to avoid condensation on the part (10, 12).

6. The method according to any of the preceding claims, wherein in step b) the exposure to hot steam (28) is done before the drying of the steamed sealant (22).

7. The method according to any of the preceding claims, wherein in step b) a tool head (30) is arranged at or moved relatively along the sealant (22), so as to expose and dry the uncured sealant (22).

8. The method according to claim 7, wherein the tool head includes a steam zone (48) and a drying zone (50), the sealant (22) being arranged within any of the zones (48, 50) and/or the zones (48, 50) being at least partially closed on one side by the sealant (22), wherein the sealant (22) is exposed to the hot steam (28) when passing the steam zone (48, 50) and the sealant (22) is dried when passing the drying zone (50).

9. The method according to claim 8, wherein the steam zone (48) is separated from the drying zone (50) by a wall (52).

10. The method according to any of the preceding claims, wherein the steam zone (48) and/or the drying zone (50) are temperature controlled using a temperature sensor (54).

11. The method according to any of the preceding claims, wherein the steam zone (48) and/or the drying zone (50) are humidity controlled using a humidity sensor (54).

12. A tool head (30) adapted for use in a method according to any of the preceding claims, the tool head (30) comprising a steam zone (48) configured for discharging hot steam (28) towards a sealant (22), and a drying zone (50) configured for discharging hot air (32) towards the sealant (22).

13. A curing apparatus (40) comprising a tool head (30) according to claim 12 and a control unit (46) that is configured for performing the method according to any of the claims 1 to 11.

14. The curing apparatus (40) according to claim 13, further comprising a steam generator (42) configured for generating hot steam (28), wherein the steam generator (42) is operatively coupled to the steam zone (48), so as to discharge the hot steam (28) towards the sealant (22).

15. The curing apparatus (40) according to claim 13 or 14, further comprising a heating apparatus (44) that includes a heating element (56) configured for heating air and a fan (58) for generating an air flow, wherein the air flow is heatable by the heating element (56), wherein the heating apparatus (40) is operatively coupled to the drying zone (50), so as to discharge a dry hot air (32) flow towards the sealant (22).
